# EUROPEAN PATENT APPLICATION

(11) **EP 1 837 585 A2**
(43) Date of publication of application: **26.09.2007**
(21) Application number: 07005973.8
(22) Date of filing: 22.03.2007
(51) Int. Cl.: F16M 13/02, F16M 11/10

(54) **Automatic wall mounting system for wall-mounted tv**

(30) Priority: 24.03.2006 KR 20060026982
(71) Applicant: Keyang Electric Machinery Co., Ltd., Jung-gu Seoul 100-080 (KR)
(72) Inventor: Chun, Hyung Hwan, Suwon-si, Gyeonggi-do 443-780 (KR); Lee, Hyoung Ho, Bucheon-si, Gyeonggi-do 420-709 (KR); Cho, Ju Yeon, Yongin-si, Gyeonggi-do 448-130 (KR)
(74) Representative: Schumacher & Willsau

(57) **Abstract**

Provided is an automatic wall mounting system for a wall-mounted television (TV). The system includes a support plate (10), a tilt plate (20), and a tilt manipulation unit. The support plate (10) is mounted on a wall body, and has a plurality of upper and lower supports. The tilt plate (20) has joints coupled to the lower supports of the support plate, and has a joint provided at an upper end. The tilt manipulation unit is provided between the support plate (10) and the tilt plate (20), and tilts up/down an upper end of the tilt plate (20) about the support plate (10).

## Description

### BACKGROUND OF THE INVENTION

### Field of the Invention

The present invention relates to an automatic wall mounting system for a wall-mounted television (TV), and more particularly, to an automatic wall mounting system for a wall-mounted TV, for automatically tilting up/down a screen of the TV at a viewer's eye level.

### Description of the Related Art

In general, large-sizing and slimness of Liquid Crystal Display (LCD) and Plasma Display Panel (PDP) televisions (TVs) result in the popularization of a wall-mounted TV mounted on a wall as an alternative for positioning the TV by a height suitable for viewer's TV watching as well as securing interior spaces.

The wall-mounted TV is of a general type in which it is built in and fixed to a wall surface by a coupling means such as a bolt, or it is mounted in front of a tilting bracket installed on a wall surface such that that a viewer can up/down control a screen position of the TV in a manual manner.

Among the related-art TV installation methods, however, a built-in installation method has a drawback that it is impossible to tilt up/down a screen of the TV at a viewer's eye level. A bracket based installation method causes troublesomeness that the viewer should directly control the screen position of the TV in the manual manner, though he/she can control the screen position.

### SUMMARY OF THE INVENTION

An aspect of exemplary embodiments of the present invention is to address at least the problems and/or disadvantages and to provide at least the advantages described below. Accordingly, an aspect of exemplary embodiments of the present invention is to provide an automatic wall mounting system for a wall-mounted television (TV), for automatically tilting up/down a screen of the TV at a viewer's eye level in a remote place, thereby providing an optimal screen position to a viewer in real time while promptly, simply, and conveniently tilting up/down the screen by automation.

According to one aspect of exemplary embodiments of the present invention, there is provided an automatic wall mounting system for a wall-mounted television (TV). The system includes a support plate, a tilt plate, and a tilt manipulation unit. The support plate is mounted on a wall body, and has a plurality of upper and lower supports each provided at its front upper and lower sides. The tilt plate has joints coupled to the lower supports of the support plate and each provided at both rear and lower ends, and has a joint provided at an upper end, and mounts the TV in its front. The tilt manipulation unit is provided between the support plate and the tilt plate, and is coupled to each of the upper supports and joint thereof, and tilts up/down an upper end of the tilt plate about the support plate.

The tilt manipulation unit may include a motor, a gear box, a retractable unit, and a rotary shaft. The motor is provided in front of the support plate, and has a rod rotating forward and backward. The gear box is provided at an end of the rod of the motor, and converts an axial rotation force of the rod into a vertical rotation force. The retractable unit connects at one end with the gear box, and retracts up/down at the other end as the rod rotates forward and backward. The rotary shaft connects with an upper end of the retractable unit, and rotates forward or backward as supported at both ends by the support plate, and has a connection link provided on its circumferential surface and connecting with the tilt plate. The connection link pushes and pulls the tilt plate as tilting up/down by a hinge.

The retractable unit may include a male screw part, and a female screw part. The male screw part connects with the gear box, and rotates at its place. The female screw part covers and screws with the male screw part, and moves up/down as the male screw part rotates forward/backward.

The gear box may connect the rod with the retractable unit by a worm gear manner.

A hinge fragment may be provided between an upper end of the female screw part of the retractable unit and the rotary shaft, and may be integrally connected with the rotary shaft and is hinged and connected with the female screw part.

### BRIEF DESCRIPTION OF THE DRAWINGS

The accompanying drawings, which are included to aid in The above and other objects, features and advantages of the present invention will become more apparent from the following detailed description when taken in conjunction with the accompanying drawings in which:

FIG. 1 is a perspective view illustrating a support plate of an automatic wall mounting system for a wall-mounted television (TV) according to an exemplary embodiment of the present invention;

FIG. 2 is a perspective view illustrating a tilt plate of an automatic wall mounting system for a wall-mounted TV according to an exemplary embodiment of the present invention;

FIG. 3 is a perspective view illustrating a tilt manipulation unit of an automatic wall mounting system for a wall-mounted TV according to an exemplary embodiment of the present invention;

FIG. 4 is a schematic view illustrating a state where a tilt manipulation unit is coupled to a support plate in an automatic wall mounting system for a wall-mounted TV according to an exemplary embodiment of the present invention;

FIG. 5 is a perspective view illustrating a state where a connection link of a tilt manipulation unit is coupled with an upper joint of a tilt plate in an automatic wall mounting system for a wall-mounted TV according to an exemplary embodiment of the present invention;

FIG. 6 is a schematic side view illustrating an operation-before-state of an automatic wall mounting system for a wall-mounted TV according to an exemplary embodiment of the present invention; and

FIG. 7 is a schematic side view illustrating an operation-after-state of an automatic wall mounting system for a wall-mounted TV according to an exemplary embodiment of the present invention.

Throughout the drawings, the same drawing reference numerals will be understood to refer to the same elements, features and structures.

### DETAILED DESCRIPTION OF THE INVENTION

Exemplary embodiments of the present invention will now be described in detail with reference to the annexed drawings. In the following description, a detailed description of known functions and configurations incorporated herein has been omitted for conciseness.

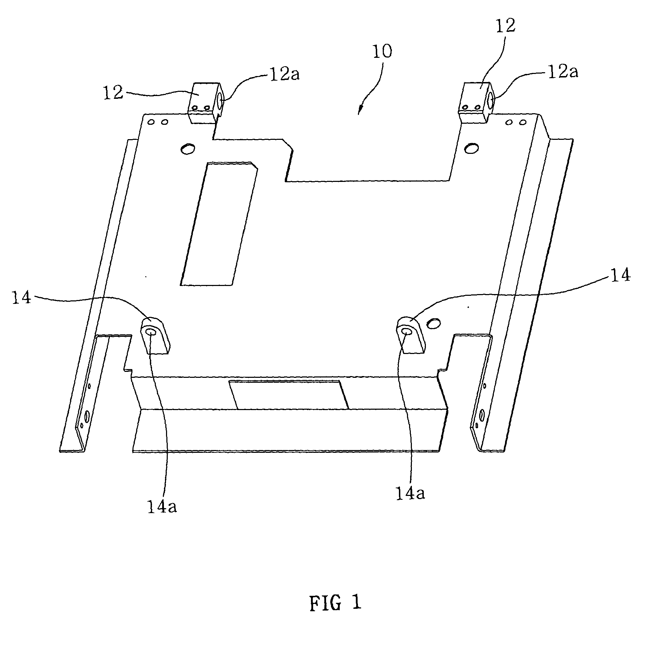

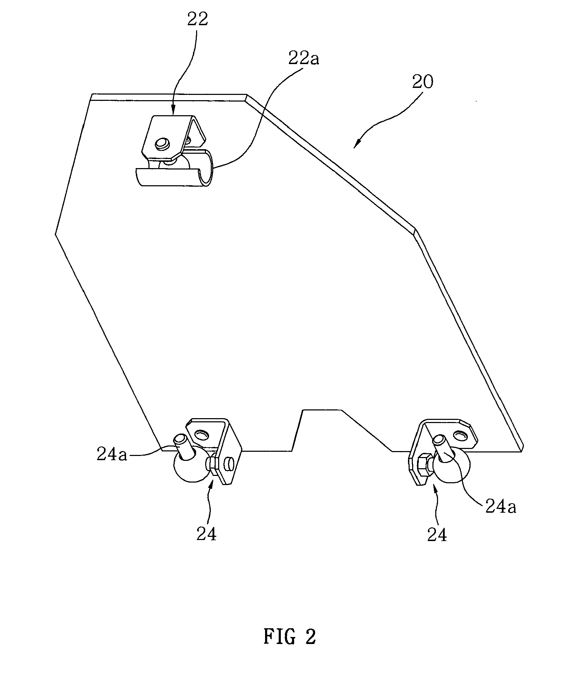

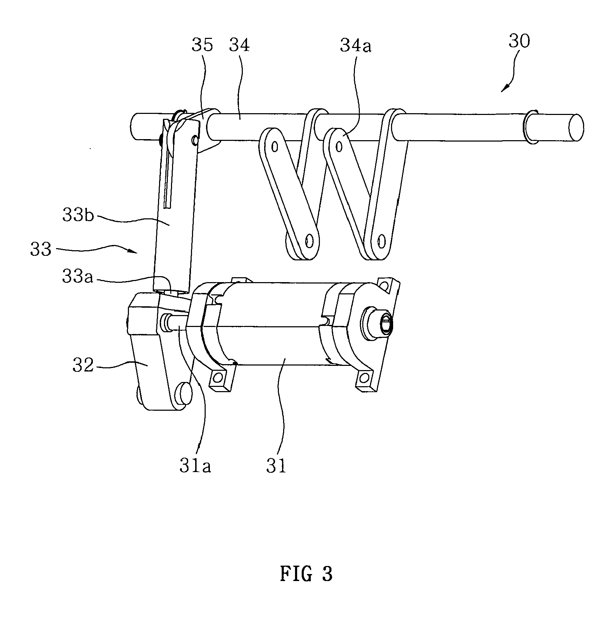

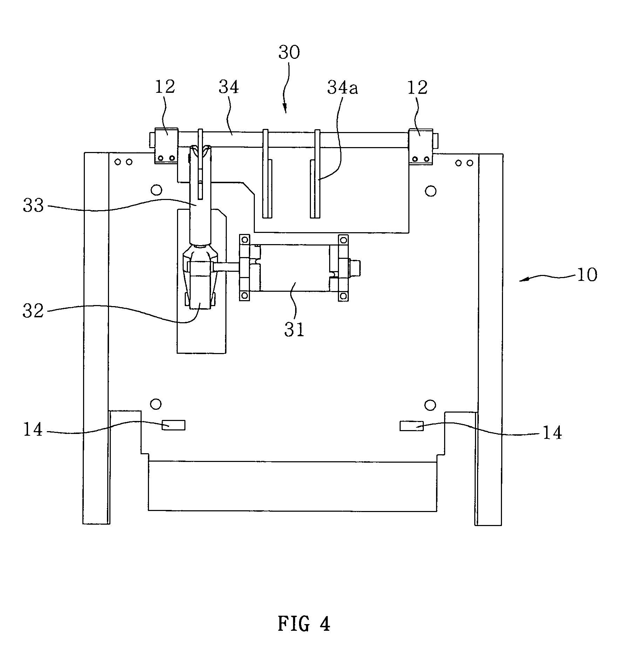

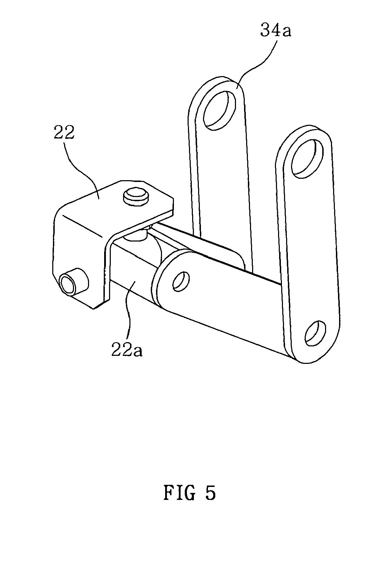

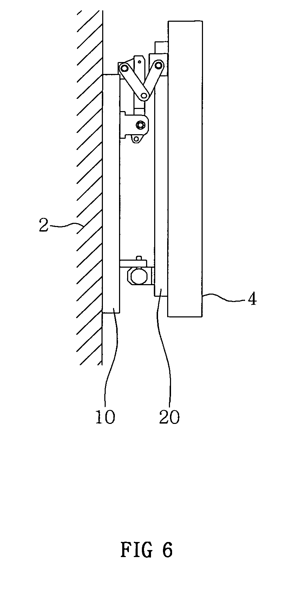

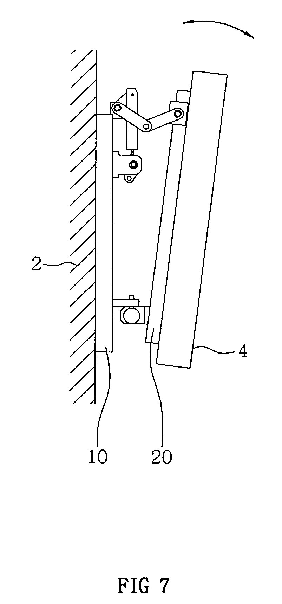

As shown in FIGS. 1 to 7, an automatic wall mounting system for a wall-mounted television (TV) according to an exemplary embodiment of the present invention includes a support plate 10 mounted on a wall body 2; a tilt plate 20 mounting the TV 4 in its front; and a tilt manipulation unit 30 coupled with each of the support plate 10 and the tilt plate 20, and tilting up/down an upper end of the tilt plate 20 about the support plate 10.

The support plate 10 is of a board shape in which it is mounted on the wall body 2, and has a plurality of upper and lower supports 12 and 14 each provided at its front upper and lower sides. In particular, the support plate 10 can be separately fixed to the wall body 2 using coupling holes (not shown) provided at both ends that are bent and step-shaped. Alternately, the support plate 10 can be coupled to a separate elevating unit (not shown) previously fixed and installed at the wall body 2 to elevate or descend.

The upper supports 12 of the support plate 10 face with each other at their both front and upper sides. The upper supports 12 each have through-holes 12a for rotatably inserting both ends of a rotary shaft 34 of the tilt manipulation unit 30, respectively.

The lower supports 14 of the support plate 10 are disposed in parallel on the same horizontal line. The lower supports 14 have through-holes 14a obtained by up/down penetration, and rotatably insert joint protrusions 24a of both lower joints 24 of the tilt plate 20.

The tilt plate 20 is of a board shape in which it has a plurality of upper and lower joints 22 and 24 in its rear correspondingly to the upper and lower supports 12 and 14 of the support plate 10, and installs the TV 4 in its front.

The upper joint 22 is a ball joint with a guide socket 22a. The guide socket 22a covers and turns around a ball, and connects with a connection link 34a of the tilt manipulation unit 30.

The lower joint 24 is a ball joint with the joint protrusion 24a. The joint protrusion 24a is provided and supported at one side on a circumferential surface of the ball, passing through the through-hole 14a of the lower support 14 of the support plate 10.

The tilt manipulation unit 30 includes a motor 31 provided in front of the support plate 10, and having a rod 31a rotating forward and backward; a gear box 32 provided at an end of the rod 31a of the motor 31, and converting an axial rotation force of the rod 31a into a vertical rotation force; a retractable unit 33 connecting at one end with the gear box 32, and retracting up/down at the other end as the rod 31a rotates forward or backward; and the rotary shaft 34 connecting with an upper end of the retractable unit 33, and rotating forward or backward as supported at its both ends by the support plate 10, and having the connection link 34a on its circumferential surface. The connection link 34a connects with the tilt plate 20, and pushes and pulls the tilt plate 20 as tilting up/down by a hinge.

The retractable unit 33 includes a male screw part 33a connecting with the rod 31a via the gear box 32, and rotating at its place; and a female screw part 33b covering and screwing with the male screw part 33a, and moving up/down as the male screw part 33a rotates forward/backward.

The gear box 32 connects the rod 31a with the male screw part 33a by a worm gear manner. In other words, worm gears connect to ends of the rod 31a and the male screw part 33a interconnecting with each other, respectively. The worm gears are geared with each other, and transmit the rotation force of the rod 31a to the male screw parts 33a disposed in a vertical direction.

In addition to the worm gear, the gear box 32 can apply a combination of various gears such as a rack pinion gear or a bevel gear for converting the rotation force into the vertical rotation force.

The rotary shaft 34 having a rod shape is rotatably inserted at its both ends and supported in the through-holes 12a of the both upper supports 12 of the support plate 10. The rotary shaft 34 has the connection link 34a at its center part. The connection link 34a is coupled at its both ends to the rotary shaft 34 and the guide socket 22a of the upper joint 22 of the tilt plate 20. The connection link 34a is connected by a hinge at its center part and thus, has a "V"-shape. The connection link 34a pulls and pushes the tilt plate 20 as folded and unfolded when the rotary shaft 34 rotates forward and backward.

A hinge fragment 35 is provided between an upper end of the female screw part 33b of the retractable unit 33 and the rotary shaft 34. The hinge fragment 35 is integrally connected with the rotary shaft 34, and is hinged and connected with the female screw part 33b.

The automatic wall mounting system for a wall-mounted TV according to an exemplary embodiment of the present invention is completely assembled as follows. First, the support plate 10 is fixingly mounted on the wall body 2. After that, the tilt manipulation unit 30 is disposed in front of the support plate 10 such that the rotary shaft 34 is rotatably inserted and supported by the upper support 12 of the support plate 10. Next, the tilt plate 20 covers a front surface of the tilt manipulation unit 30. Thus, the guide socket 22a of the upper joint 22 of the tilt plate 20 connects with the connection link 34a of the tilt manipulation part 30. At the same time, the joint protrusion 24a of the lower joint 24 is inserted into and supported in the through-hole 14a of the lower support 14 of the support plate 10.

In this state, a viewer can control an up/down tilt angle of the screen of the TV 4 at his/her eye level in a remote place, using a remote controller.

For example, when it is intended to tilt down the screen of the TV 4, the motor 31 is driven to rotate the rod 31a in a desired direction. The rotation force of the rod 31a serves to push upward the female screw part 33b of the retractable unit 33 disposed in the vertical direction through the gear box 32. The rotary shaft 34 is rotated in engagement connecting with the female screw part 33b by the hinge fragment 35. Thus, the connection link 34a extends to the front. Because the tilt plate 20 is hinged and fixed at its lower end, the connection link 34 extends in a "V"-shape while pushing an upper end of the tilt plate 20 to the front, thereby tilting down the screen of the TV by the hinge.

As described above, the automatic wall mounting system for a wall-mounted TV according to an exemplary embodiment of the present invention has an effect of automatically tilting up/down the screen of the TV at a viewer's eye level in a remote place, thereby providing an optimal screen position to the viewer in real time while promptly, simply, and conveniently tilting up/down the screen by automation.

While the invention has been shown and described with reference to a certain preferred embodiment thereof, it will be understood by those skilled in the art that various changes in form and details may be made therein without departing from the spirit and scope of the invention as defined by the appended claims.

## Claims

1. An automatic wall mounting system for a wall-mounted television (TV), the system comprising:
a support plate mounted on a wall body, and having a plurality of upper and lower supports and each provided at its front upper and lower sides;
a tilt plate having joints coupled to the lower supports of the support plate and each provided at both rear and lower ends, having a joint provided at an upper end, and mounting the TV in its front; and
a tilt manipulation unit provided between the support plate and the tilt plate, and coupled to each of the upper supports and joint thereof, and tilting up/down an upper end of the tilt plate about the support plate 10.

2. The system of claim 1, wherein the tilt manipulation unit comprises:
a motor provided in front of the support plate, and having a rod rotating forward and backward;
a gear box provided at an end of the rod of the motor, and converting an axial rotation force of the rod into a vertical rotation force;
a retractable unit connecting at one end with the gear box, and retracting up/down at the other end as the rod rotates forward and backward; and
a rotary shaft connecting with an upper end of the retractable unit, and rotating forward or backward as supported at both ends by the support plate, and having a connection link provided on its circumferential surface and connecting with the tilt plate, the connection link pushing and pulling the tilt plate as tilting up/down by a hinge.

3. The system of claim 2, wherein the retractable unit comprises:
a male screw part connecting with the gear box, and rotating at its place; and
a female screw part covering and screwing with the male screw part, and moving up/down as the male screw part rotates forward/backward.

4. The system of claim 2 or 3, wherein the gear box connects the rod with the retractable unit by a worm gear manner.

5. The system of claim 2 or 3, wherein a hinge fragment is provided between an upper end of the female screw part of the retractable unit and the rotary shaft, and is integrally connected with the rotary shaft and is hinged and connected with the female screw part.
